(19) **Europäisches Patentamt / European Patent Office / Office européen des brevets**

(11) **EP 3 447 161 B1**

(12) # EUROPEAN PATENT SPECIFICATION

(45) Date of publication and mention
of the grant of the patent:
**23.02.2022 Bulletin 2022/08**

(21) Application number: **17786056.6**

(22) Date of filing: **21.04.2017**

(51) International Patent Classification (IPC):
$C22C\ 38/58$ (2006.01)   $C22C\ 38/02$ (2006.01)
$C22C\ 38/04$ (2006.01)   $C22C\ 38/06$ (2006.01)
$C22C\ 38/08$ (2006.01)   $C22C\ 38/12$ (2006.01)
$C22C\ 38/14$ (2006.01)   $C22C\ 38/16$ (2006.01)
$C22C\ 38/42$ (2006.01)   $C22C\ 38/44$ (2006.01)
$C22C\ 38/46$ (2006.01)   $C22C\ 38/48$ (2006.01)
$C22C\ 38/50$ (2006.01)   $C22C\ 38/54$ (2006.01)
$C21D\ 9/46$ (2006.01)   $C21D\ 8/02$ (2006.01)
$C21D\ 6/00$ (2006.01)   $B23K\ 103/04$ (2006.01)
$C21D\ 6/02$ (2006.01)

(52) Cooperative Patent Classification (CPC):
C22C 38/001; C22C 38/002; C22C 38/005;
C22C 38/02; C22C 38/04; C22C 38/06;
C22C 38/08; C22C 38/12; C22C 38/14;
C22C 38/16; C22C 38/42; C22C 38/44;
C22C 38/46; C22C 38/48; C22C 38/50;   (Cont.)

(86) International application number:
**PCT/JP2017/016089**

(87) International publication number:
**WO 2017/183719 (26.10.2017 Gazette 2017/43)**

(54) **HIGH TENSILE STEEL AND MARINE STRUCTURE**

STAHL MIT HOHER ZUGFESTIGKEIT UND MARINESTRUKTUR

ACIER À HAUTE RÉSISTANCE À LA TRACTION ET STRUCTURE MARINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.04.2016 JP 2016085151**

(43) Date of publication of application:
**27.02.2019 Bulletin 2019/09**

(73) Proprietor: **Nippon Steel Corporation
Tokyo 100-8071 (JP)**

(72) Inventors:
• **KASANO, Kazuki**
  **Tokyo 100-8071 (JP)**
• **KAMO, Takahiro**
  **Tokyo 100-8071 (JP)**
• **IGARI, Haruki**
  **Tokyo 100-8071 (JP)**
• **NAKAMURA Shuichi**
  **Tokyo 100-8071 (JP)**
• **HOSOYA Noritaka**
  **Tokyo 100-8071 (JP)**

(74) Representative: **Zimmermann & Partner
Patentanwälte mbB
Postfach 330 920
80069 München (DE)**

(56) References cited:
**WO-A1-2005/052205    JP-A- H04 279 248
JP-A- 2001 207 242    US-A1- 2007 051 433**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

(52) Cooperative Patent Classification (CPC): (Cont.)
  **C22C 38/54; C22C 38/58;** B23K 2103/04;
  C21D 6/001; C21D 6/004; C21D 6/005;
  C21D 6/008; C21D 6/02; C21D 8/005;
  C21D 8/0226; C21D 8/0263; C21D 9/46;
  C21D 2211/002; C21D 2211/004; C21D 2211/008

**Description**

TECHNICAL FIELD

The present invention relates to a high tensile strength steel and marine structure. In particular, the present invention relates to a high tensile strength steel that is excellent in toughness in a weld heat-affected zone (hereinafter, referred to as "HAZ"), and to a marine structure in which the high tensile strength steel is used. More specifically, the present invention relates to a high tensile strength steel for welding for use in welded structures such as buildings, civil engineering structures, construction equipment, ships, pipes, tanks, and marine structures, and particularly to a high tensile strength steel for welding that is used in marine structures as well as to a marine structure. For example, the present invention relates to a thick high tensile strength steel with a thickness of 50 mm or more and a yield strength of 420 MPa or more, and to marine structure that includes such high tensile strength steel.

BACKGROUND ART

In recent years, as energy demands show a tendency to increase more and more, the search for offshore oil resources is being actively carried out. For example, marine structures that are used in the search for offshore oil resources such as platforms and jack-up rigs are becoming large in size. In accompaniment therewith, the thickness of steel materials such as steel plates used in such structures is increasing, and ensuring greater safety has become an important issue.

A medium strength steel material having a yield stress of 300 to 360 MPa-class is used in ordinary marine structures. In large structures, an extremely thick high tensile strength steel material that has a yield strength as high as 460 to 700 MPa-class and a plate thickness of more than 100 mm may be used in some cases.

In recent years, the regions where searches for offshore oil resources are conducted are shifting to cold regions and deep water regions. Marine structures which operate in such regions are exposed to extremely severe weather conditions and ocean conditions. Therefore, steel materials used in such marine structures are required to have toughness in extremely severe low temperature ranges such as at -40°C or below, and weldability is of course also required.

In addition, the inspection standards of users are becoming more severe from the standpoint of safety. In addition to the toughness of base metals and weld zones being defined by the conventional Charpy impact value, a CTOD value at the lowest temperature of use is also now defined and used to evaluate the toughness. Specifically, even when stable properties are obtained in a Charpy test (an evaluation test performed on a minute specimen that is collected after being cut into a size of 10 mm × 10 mm), there are many cases in which the CTOD properties which are evaluated based on a specimen having the actual plate thickness of the relevant structure are insufficient. Furthermore, nowadays even stricter CTOD properties are being demanded.

Thus, there is a strong demand for an increase in the low temperature toughness of HAZs with respect to not only steel materials used in marine structures installed in icy waters but also with respect to steel materials used in line pipes for cold regions that are to be used under a milder environment as well as for large welded structures such as ships and LNG tanks.

On the other hand, in order to obtain a high toughness in a low temperature range of -40°C or below, it is necessary to perform welding under low heat input welding conditions, for which the welding efficiency is low. Welding costs account for a large proportion of the construction cost of marine structures. The most direct method for decreasing welding costs is to employ a high performance welding method capable of high heat input welding so as to decrease the number of welding passes. Accordingly, in structures intended for cold regions where the demands regarding low temperature toughness are severe, it is important to carry out welding so that welding costs are as low as possible while taking into consideration the HAZ toughness.

It has been known that decreasing the amount of C in a steel material is effective for improving the HAZ toughness of the steel material. In order to compensate for the decrease in the strength of the steel material due to the decrease in C, it has been attempted to increase the strength by adding various alloys, and by utilizing precipitation age hardening. For example, a steel which utilizes precipitation age hardening of Cu is disclosed in an ASTM standards (ASTM A710). A number of inventions have been disclosed based on this concept.

For example, Patent Documents 1 to 3 disclose Cu-precipitated steels that are excellent in toughness in weld zones. Patent Document 4 discloses a steel material that improves the low-temperature toughness of weld zones, particularly, HAZ toughness, by finely dispersing TiN as pinning particles by adjustment of a ratio (Al/N).

LIST OF PRIOR ART DOCUMENTS

PATENT DOCUMENT

Patent Document 1: JP7-81164A
Patent Document 2: JP5-186820A
Patent Document 3: JP5-179344A
Patent Document 4: WO2005/052205 (corresponds to US 2007/051433 A1)

SUMMARY OF INVENTION

TECHNICAL PROBLEM

Patent Document 1 merely evaluates the Charpy properties of a welded joint obtained from a plate with a thickness of 30 mm using a welding heat input of 40 kJ/cm. Therefore, the Cu-precipitated steel disclosed in Patent Document 1 cannot be considered a material which enables high heat input welding.

Patent Document 2 discloses a Cu-precipitated high tensile strength steel which contains Cu in an amount of 0.5 to 4.0 mass% and which has a tensile strength of 686 MPa or more. However, with regard to the low temperature toughness of the steel, its transition temperature in a Charpy test is only -30° C. Therefore, the Cu-precipitated high tensile strength steel disclosed in Patent Document 2 cannot really be considered to be capable of attaining low temperature CTOD properties in extremely thick steel plates.

Patent Document 3 discloses a Cu-precipitated steel that is excellent in Charpy toughness in weld zones. However, Patent Document 3 merely evaluates Charpy properties of a welded joint obtained with a welding heat input of 5 kJ/mm. Therefore, the Cu-precipitated steel disclosed by Patent Document 3 cannot be considered to be capable of adequately ensuring the safety of a structure during high heat input welding.

In addition, in the steel material disclosed in Patent Document 4, the pinning effect of TiN is liable to disappear under a high heat input welding condition. Therefore, it is highly likely that securing low-temperature toughness under a high heat input welding condition will be difficult.

An objective of the present invention is to provide a high tensile strength steel with which low-temperature toughness in a weld zone, particularly, low-temperature toughness of a HAZ, is stably obtained under a high heat input welding condition of a heat input of 300 kJ/cm or more, and a marine structure which uses the high tensile strength steel.

SOLUTION TO PROBLEM

The present inventors conducted intensive studies to solve the above described problem, and as a result obtained the findings described hereunder.

First, the findings described in <i> to <vi> below were obtained as the result of studies which investigated the precipitation of Cu particles.

<i> In order to increase yield strength, disperse as many fine Cu particles as possible.

<ii> In order to attain toughness, particularly CTOD properties at a low temperature, coarsen the Cu particles to a certain extent, and suppress the amount of dispersed Cu particles.

<iii> In order to make the dispersion state of the Cu particles uniform, inhibit the formation of Cu particles at the stages before aging treatment as much as possible, and control the dispersion state of Cu particles by controlling the conditions of the aging treatment.

<iv> The balance between strength and toughness can be controlled by adjusting the distribution state of Cu particles based on the average value of the equivalent circular diameter of the Cu particles and the plane-converted area fraction of the Cu particles which are determined by means of a TEM photograph.

<v> Cu particles readily form on crystal defects (primarily on dislocations) in steel, and if the dislocation density is high, precipitation of Cu particles is promoted. Further, Cu particles on dislocations impede the movement of dislocations and increase yield strength.

<vi> The dislocation density in steel can be controlled by means of the rolling conditions and water cooling conditions. Further, a decrease in the rolling temperature, an increase in the overall rolling, an increase in the temperature at the start of water cooling, an increase in the cooling rate, and a decrease in the temperature at the termination of water cooling each increase the dislocation density.

Next, the present inventors investigated inclusions.

To attain low-temperature toughness in a HAZ, it is effective to decrease a fracture unit by refining the grains. As techniques for refining grains, the known conventional techniques include (I) a technique that utilizes a pinning effect which inhibits the growth of a prior-austenite grain boundary by means of TiN or the like, and (II) a technique that causes fine intragranular ferrite to grow using inclusions that are present within prior-austenite grains as starting points, to thereby refine the grains. The present inventors focused their attention on the technique described in (II).

In particular, in a thick steel plate having a thickness of 50 mm or more, it is difficult to control the composition and number of inclusions in the plate thickness direction by making the cooling rate on the surface and inside the steel plate different. Therefore, control of inclusions that act as formation nuclei for intragranular ferrite is needed for effectively causing intragranular ferrite to grow within prior-austenite grains during welding. As a result of studying the mechanism of intragranular ferrite growing, the present inventors found the following matters.

[1] During welding cooling, a driving force that diffuses Mn from the matrix to the inside of inclusions arises due to the gradient of the Mn concentration that is formed when MnS compositely precipitates around the inclusions.

[2] Mn is absorbed into atomic vacancies that are present inside Ti-based oxides.

[3] An Mn-depleted zone in which the Mn concentration is reduced is formed around the inclusion, and the ferrite growth-initiating temperature at that portion rises.

[4] During cooling, ferrite grows with priority from the inclusions.

On the premise of the above facts, the present inventors found that the MnS composite amount of an inclusion that serves as a nucleus of intragranular ferrite influences the growth of the intragranular ferrite. In other words, when a large amount of MnS is composited, the driving force that diffuses Mn increases because a larger Mn concentration gradient is formed around the inclusion. As a result, an Mn-depleted zone is formed more easily. On the other hand, when a small amount of MnS is composited, it is difficult for a Mn concentration gradient to be formed around the inclusion. As a result, it is difficult for an Mn-depleted zone to be formed.

In other words, by controlling the amount and number density of MnS that is composited with inclusions, intragranular ferrite can be precipitated effectively.

In addition, the present inventors found that to obtain a grain refining effect, it is necessary for the inclusions in the steel to satisfy the following requirements.

(a) A composite inclusion in which MnS is present around a Ti oxide is contained in the steel, with an area fraction of the MnS in a cross-section of the composite inclusion being 10% or more and less than 90%, and the proportion that MnS accounts for in the peripheral length of the composite inclusion being 10% or more.

(b) The number density of the composite inclusions that have a grain diameter in a range of 0.5 to 5.0 $\mu$m is in a range of 10 to 100 per mm$^2$.

The present invention is based on the foregoing findings and is as defined in the appended claims.

ADVANTAGEOUS EFFECTS OF INVENTION

According to the present invention, a high tensile strength steel with which low-temperature toughness in a weld zone, particularly HAZ toughness, is stably obtained even when welding is performed under a high heat input welding condition of a heat input of 300 kJ/cm or more, as well as a marine structure that includes the high tensile strength steel can be provided.

DESCRIPTION OF EMBODIMENTS

The present invention will be described in details below.

(A) Chemical Composition

The operational advantages of each element as well as the reasons for limiting the content of each element will now be described. The symbol "%" as used herein in relation to the chemical composition or concentration means "mass%" unless specifically stated otherwise.

(A1) C: 0.01 to 0.10%

C enhances the strength of the base metal. Further, C refines the metal micro-structure when Nb, V or the like is added. Therefore, the C content is 0.01% or more, preferably 0.02% or more and more preferably 0.03% or more.

On the other hand, if an excessive amount of C is contained, a hard micro-structure referred to as island martensite (abbreviated as M-A) forms in weld zones and the HAZ toughness deteriorates, and the toughness and weldability of the base metal also deteriorates. Therefore, the C content is 0.10% or less, preferably 0.08% or less and more preferably 0.05% or less.

(A2) Si: 0.01 to 0.50%

Si is effective for preliminary deoxidation of molten steel. Therefore, the Si content is 0.01% or more,

On the other hand, if an excessive amount of Si is contained, because Si does not dissolve in cementite, untransformed austenite grains are prevented from breaking down into ferrite grains and cementite, and the formation of island martensite is promoted. Therefore, the Si content is 0.50% or less, preferably 0.20% or less and more preferably 0.15% or less.

(A3) Mn: 0.80 to 2.50%

Mn is necessary for attaining strength, and also inhibits growth of coarse ferrite at grain boundaries in a HAZ. Therefore, the Mn content is 0.80% or more and preferably 1.40% or more.

On the other hand, if an excessive amount of Mn is contained, the weldability and HAZ toughness deteriorate due to an excessive increase in hardenability. Mn also promotes center segregation. Therefore, the Mn content is 2.50% or less, from the view point of suppression of center segregation, the Mn content is 2.50% or less, and preferably 2.10% or less.

(A4) P: 0.020% or less

P is an impurity, and is an element which segregates at grain boundaries, and hence it causes intergranular cracking in a HAZ. In order to increase the base metal toughness as well as the toughness of the weld metal and HAZ to reduce segregation at the center of a slab, the content of P is 0.020% or less, preferably 0.015% or less, and more preferably 0.010% or less.

(A5) S: 0.001 to 0.010%

S causes MnS to compositely precipitate. Therefore, the S content is 0.001% or more, and preferably 0.002% or more.

On the other hand, if an excessive amount of S is contained, coarse singular MnS that acts as a starting point for weld cracks precipitates, and consequently the HAZ toughness decreases. Therefore, the S content is 0.10% or less, and from the view point of securing low-temperature toughness of HAZ, preferably 0.005% or less.

(A6) Cu: 0.80 to 1.50%

Cu increases the strength and toughness of the steel material, and its adverse effect on HAZ toughness is small. In particular, Cu increases the strength by epsilon ($\varepsilon$)-Cu precipitation at the time of aging treatment. Therefore, the Cu content is 0.80% or more, and preferably 0.90% or more.

On the other hand, if an excessive amount of Cu is contained, the weld crack susceptibility at high temperature increases, and welding operations such as preheating become complicated. Therefore, the Cu content is 1.50% or less, and preferably 1.10% or less.

(A7) Ni: 0.20 to 1.50%

Ni increases the strength and toughness of the steel material, and also increases the HAZ toughness. Therefore, the Ni content is 0.20% or more, and preferably 0.40% or more.

On the other hand, if the Ni content is more than 1.50%, an effect commensurate with the increase in the alloy cost is not obtained. Therefore, the Ni content is 1.50% or less, and preferably 1.20% or less.

(A8) Al: 0.003% or less

Al is an impurity, and as the Al content increases, the formation of Ti-based oxides is inhibited. Therefore, the Al content is 0.003% or less

(A9) Ti: 0.005 to 0.030%

Ti forms nitrides and inhibits the coarsening of grains and is also necessary for formation of inclusions that act as intragranular transformation nuclei. Therefore, the Ti content is 0.005% or more, and preferably 0.007% or more.
On the other hand, if an excessive amount of Ti is contained, the toughness of the base metal and the weld zones deteriorates. Therefore, the Ti content is 0.30% or less, and preferably 0.015% or less.

(A10) N: 0.003 to 0.008%

N refines the micro-structure by forming nitrides. Therefore, the N content is 0.003% or more, and preferably 0.0035% or more.
On the other hand, if an excessive amount of N is contained, the toughness deteriorates due to agglomeration of nitrides. Therefore, the N content is preferably 0.008% or less, and preferably 0.0065% or less.

(A11) O: 0.0005 to 0.0050%

O forms oxides which become ferrite formation nuclei. Therefore, the O content is 0.0005% or more, and preferably 0.0008% or more.
On the other hand, if an excessive amount of O is contained, steel cleanliness markedly deteriorates, and toughness cannot be attained in the base metal, the weld metal and HAZs. Therefore, the O content is 0.0050% or less, and preferably 0.0035% or less.

(A12) Nb: 0 to 0.030%, Mo: 0 to 0.80%, Cr: 0 to 0.80%, B: 0 to 0.0020%, V: 0 to 0.050%

Nb, Mo, Cr, B and V each have an action that increases the strength of the steel, and one or more types of these elements may be contained in the steel.
Nb increases the strength and toughness of the base metal by grain refinement and precipitation of carbides, and therefore may be contained. However, if an excessive amount of Nb is contained, the effect of improving the performance of the base metal is saturated, and the HAZ toughness markedly decreases. Accordingly, the Nb content is 0.030% or less, and preferably 0.015% or less.
To reliably obtain these effects, the Nb content is preferably 0.003% or more.
Mo secures hardenability and increases the HAZ toughness, and therefore may be contained in the steel. However, if an excessive amount of Mo is contained, the HAZ toughness markedly decreases due to hardening of the HAZs. Therefore, the Mo content is 0.80% or less, and preferably 0.50% or less.
To reliably obtain these effects, the Mo content is preferably 0.10% or more.
Cr increases the strength by improving the hardenability of the steel material, and therefore may be contained in the steel. However, if an excessive amount of Cr is contained, the Cr promotes hardening of the weld metal and HAZs, and increases the weld crack susceptibility at low temperature. Therefore, the Cr content is 0.80% or less, and preferably 0.60% or less.
To reliably obtain the aforementioned effect, the Cr content is preferably 0.03% or more, more preferably 0.05% or more.
B increases the strength by improving the hardenability of the steel material, and therefore may be contained in the steel. However, if an excessive amount of B is contained, the effect of increasing the strength is saturated, and the toughness of the base metal and HAZs markedly deteriorates. Therefore, the B content is 0.0020% or less, and preferably 0.0015% or less.
To reliably obtain the aforementioned effect, the B content is preferably 0.0002% or more, more preferably 0.0003% or more.
V forms carbonitrides and inhibits coarsening of grains, and also refines the transformation micro-structure, and therefore may be contained in the steel. However, if an excessive amount of V is contained, the toughness of the base metal and weld zones deteriorates. Therefore, the V content is 0.050% or less, and preferably 0.040% or less.
To reliably obtain the aforementioned effect, the V content is preferably 0.001% or more, more preferably 0.005% or more.

(A13) Ca: 0 to 0.005%, Mg: 0 to 0.01%, REM: 0 to 0.01%,

Ca, Mg and REM each form oxides or sulfides which serve as precipitation nuclei of intragranular ferrite, and also control the form of sulfides and increase low-temperature toughness. However, if Ca, Mg and REM are contained in an excessive amount, the cleanliness of the steel deteriorates. Therefore, the Ca content is 0.005% or less, and the Mg content and REM content is respectively 0.001% or less.

To reliably obtain these effects, the Ca content is preferably 0.0005% or more, and more preferably is 0.00055% or more, the Mg content is preferably 0.0001% or more, and the REM content is preferably 0.0001% or more.

One type of element among Ca, Mg and REM may be individually contained, or a combination of two or more types of these elements may be contained.

The high tensile strength steel according to the present invention contains the aforementioned elements, and the balance is Fe and impurities. The term "impurities" means components which, during industrial production of the steel, are mixed in from raw material such as ore or scrap or due to various factors in the production process, and which are allowed to be contained in a range that does not adversely affect the present invention.

(A14) Cracking parameter of material Pcm: 0.25 or less

In the high tensile strength steel according to the present invention, a cracking parameter of material Pcm obtained by the aforementioned formula (1) is 0.25 or less. When the cracking parameter of material Pcm is 0.25 or less, weld cracks do not occur under usual welding conditions. Accordingly, the cracking parameter of material Pcm is 0.25 or less, and preferably is 0.22 or less in order to omit preheating at the time of welding, and more preferably is 0.20 or less.

(B) Cu Precipitates

In the high tensile strength steel according to the present invention, Cu particles having a major axis of 1 nm or more are dispersed in the steel, and an average value of an equivalent circular diameter of the Cu particles is in a range of 4 to 25 nm, and a plane-converted distribution amount of the Cu particles is in a range of 3 to 20%.

(B1) Average value of equivalent circular diameter of Cu particles having major axis of 1 nm or more: 4 to 25 nm

Because the strength increasing effect of Cu particles having a major axis measuring less than 1 nm is small, the present invention takes Cu particles that have a major axis of 1 nm or more as an object. An upper limit of the length of the major axis of the Cu particles is not particularly defined. Cu particles having a major axis that is more than 100 nm do not appear in a range in which the average value of the equivalent circular diameter is from 4 to 25 nm.

Although the precipitation form of Cu particles is roughly a spherical shape, measuring a solid shape is not easy. Therefore, transmission electron microscope (TEM) observation is performed, and shapes obtained by planar projection of solid shapes are measured.

The term "equivalent circular diameter" used herein refers to the diameter of a circle having an area which is the same as the projected area of a particle, and specifically is obtained from formula (2) below:

$$d = \sqrt{(4a/pi)} \quad ...(2)$$

where, the meaning of each symbol in formula (2) is as follows:

a: projected area ($nm^2$)
d: equivalent circular diameter (nm)
pi: 3.14

(B2) Plane-converted distribution amount of Cu particles having major axis of 1 nm or more: 3 to 20%

The plane-converted distribution amount is determined by working the steel material into a thin film, performing TEM observation at a magnification of 100,000 with respect to a portion of the thin film having a thickness of approximately 0.2 $\mu$m, and calculating the area fraction in a case where Cu particles that are three-dimensionally distributed in the thin film shaped specimen are projected onto a plane.

The reasons why the equivalent circular diameter and the plane-converted distribution amount are defined as described above will now be described.

An extremely thick high tensile strength steel having a maximum thickness close to 100 mm so as to be capable of withstanding an external force applied by ocean waves in a storm is used in many cases as the steel that is used in marine structures. It is assumed that such steel will be used under more severe circumstances in the future, and hence the steel will need to satisfy even higher CTOD values.

If the strength becomes too high due to precipitation of Cu, the CTOD value becomes lower. On the other hand, if precipitation of Cu is insufficient, the strength will be insufficient even if the CTOD value is high. There have been almost no instances of using a conventional Cu-containing steel for a marine structure, and a high CTOD value was not required for such steel. Therefore, it was not necessity to strictly control the average diameter and distribution amount of Cu particles.

In the present invention, the average diameter and distribution amount of Cu particles are defined as described above in order to achieve balance between an increase in strength and a decrease in the CTOD value that are caused by precipitation of Cu particles. Note that, the reason that the equivalent circular diameter is defined as being in the range of 4 to 25 nm and the plane-converted distribution amount is defined as being in the range of 3 to 20% is to achieve balance between strength and toughness.

The following are conceivable as factors for controlling the diameter and distribution amount of Cu particles.

[i] The distribution amount of Cu particles increases as the Cu content increases. If the Cu content is within a preferable range, the Cu particle diameter is determined primarily by micro-structure prior to aging treatment and the temperature and duration of the aging treatment. If the Cu content is less than the preferable range, the Cu particle diameter will tend to become small because of insufficient precipitation of Cu particles. On the other hand, if the Cu content is greater than the preferable range, the Cu particle diameter will tend to become larger because a large amount of Cu particles will precipitate.

[ii] The influence of the micro-structure prior to the aging treatment is large. The micro-structure prior to the aging treatment is preferably a fine micro-structure composed primarily of ferrite and bainite. Dislocations and grain boundaries and the like become sites of precipitation of Cu particles. Therefore, a micro-structure that includes many such precipitation sites makes the Cu particle diameter finer. As a result the distribution amount of the Cu particles is increased.

For this purpose, the chemical composition of the steel is suitably controlled, and the rolling conditions are also suitably controlled. In addition, the conditions for water cooling thereafter are selected so as to obtain a fine micro-structure which is composed primarily of ferrite and bainite.

[iii] The temperature and duration of the aging treatment are important factors. A desired particle dispersion state is achieved by precisely adjusting the diffusion velocity of Cu and the growth rate of Cu particles by means of the aging treatment conditions.

(C) Composite Inclusions

The high tensile strength steel according to the present invention contains composite inclusions in the steel. A composite inclusion has MnS around a Ti oxide.

(C1) Area fraction of MnS in cross-section of composite inclusion: 10% or more and less than 90%

In the present invention, composite inclusion which appears at an arbitrary cut section is analyzed. The MnS amount in the composite inclusion is defined by measuring the area fraction of MnS in the cross-sectional area of the composite inclusion.

If the area fraction of the MnS in the cross-section of the composite inclusion is less than 10%, the MnS amount in the composite inclusion is small and a sufficient Mn-depleted zone cannot be formed. As a result, it is difficult to produce intragranular ferrite.

On the other hand, if the proportion that MnS accounts for in the cross-section of the composite inclusion is 90% or more, the composite inclusion is mainly composed of MnS, and the proportion that a Ti-based oxide accounts for decreases. As a result, because the Mn absorbability decreases and a sufficient Mn-depleted zone cannot be formed, production of intragranular ferrite is difficult.

(C2) Proportion MnS accounts for in peripheral length of composite inclusion: 10% or more

The MnS in the composite inclusion is formed around a Ti-based oxide. If the proportion that MnS accounts for in the peripheral length of the composite inclusion is less than 10%, an initial Mn-depleted zone that is formed at the boundary surface between MnS and the matrix will be small. Therefore, since the amount of intragranular ferrite that is produced will be insufficient even if welding is performed, favorable low-temperature HAZ toughness will not be obtained. Therefore, the proportion that MnS accounts for in the peripheral length with respect to the matrix of the composite inclusion is 10% or more.

The larger the proportion of MnS is, the larger the initial Mn-depleted zone becomes, and the easier it becomes to produce intragranular ferrite. Therefore, although an upper limit of the proportion of MnS is not defined, normally the proportion of MnS is 80% or less.

(C3) Grain diameter of composite inclusion: 0.5 to 5.0 $\mu$m

If the grain diameter of a composite inclusion is less than 0.5 $\mu$m, the Mn amount that can be absorbed from the area surrounding the composite inclusion will be small, and as a result it will be difficult to form Mn-depleted zones that are necessary in order to produce intragranular ferrite.
On the other hand, if the grain diameter of the composite inclusion is larger than 5.0 $\mu$m, the composite inclusion will become a starting point for a fracture. As used herein, the term "grain diameter" refers to a circle-equivalent diameter of the composite inclusion.

(C4) Number density of composite inclusion: 10 to 100 per mm$^2$

To cause stable intragranular ferrite to be produced, it is necessary that at least one composite inclusion is contained within prior-austenite. Therefore, the number density of the composite inclusions is 10 per mm$^2$ or more.
On the other hand, if the number of composite inclusions is excessively large, the composite inclusions are liable to become starting points for fractures. Therefore, the number density of the composite inclusions is 100 per mm$^2$ or less.

(D) Production Method

A method for producing the high tensile strength steel according to the present invention will now be described. Even when a steel has the aforementioned chemical composition, the production method must be appropriate in order to adequately bring about precipitation hardening by Cu and to control inclusions in the steel, and to also uniformly increase the strength and toughness at each position in the thickness direction of a thick material with a thickness of 50 mm or more and to increase the yield strength.

(D1) Steelmaking

When producing the high tensile strength steel according to the present invention, to control inclusions in the steel, Ar gas is blown into the molten steel from an upper portion before an RH vacuum degassing process for secondary refining to thereby cause a reaction between slag on the surface of the molten steel and the molten steel. By this means, the total Fe amount in the slag is adjusted and the oxygen potential Oxp within the molten steel is preferably controlled to within a range of 10 to 30 ppm.
Preferably, the flow rate of the Ar gas is regulated within the range of 100 to 200 L/min, and the Ar gas blowing time period is regulated within the range of 5 to 15 min.
Thereafter, the respective elements are added during an RH vacuum degassing process and to perform component adjustment, and a cast piece (slab) having a thickness of, for example, 300 mm is cast by continuous casting.
Next, heating, hot rolling, cooling and aging treatment of the cast piece are described.

(D2) Hot rolling

The aforementioned cast piece is heated to 900 to 1120°C and subjected to hot rolling. In the present invention, in order to obtain a high toughness, austenite grains are refined to a sufficient extent to allow for the formation of an upper bainite structure at the center of the thickness of the resulting thick material. Therefore, the austenite grains of the cast piece are refined at the heating stage.
If the temperature for heating the cast piece is less than 900°C, the dissolving action will not be adequate, and in some cases sufficient precipitation hardening cannot be expected during tempering. Therefore, the heating temperature for the cast piece is preferably 900°C or more.
On the other hand, if the temperature for heating the cast piece is more than 1120°C, it is difficult to maintain austenite grains prior to hot rolling in a fine and uniform state. Consequently, in subsequent hot rolling, the austenite grains are not uniformized and refined. Therefore, the temperature for heating the cast piece is preferably 1120°C or less, more preferably 1050°C or less, and further preferably is 1000°C or less.
In the hot rolling, the overall rolling at 900°C or less is preferably 50% or more.

(D3) Cooling

After hot rolling, preferably quenching is conducted with water cooling being commenced at a temperature of

the $Ar_1$ point of the steel or higher and terminated at a temperature of 600°C or less. The quenching is conducted in order to achieve refinement of the micro-structure and to inhibit precipitation of Cu particles as much as possible in the stages before aging treatment. If water cooling is commenced at a temperature lower than the $Ar_1$ point or if cooling is carried out by air cooling, work strains are eliminated, and this causes a decrease in strength and toughness. Note that the $Ar_1$ point is determined by a method that measures a volume change of a minute specimen.

The finishing temperature of the hot rolling is preferably 700°C or more, the temperature at the start of cooling is preferably 680 to 750°C, and the cooling rate until the temperature at which cooling is terminated is preferably 1 to 50°C/sec. If the temperature at which cooling is terminated is more than 600°C, the precipitation strengthening action in the tempering may be inadequate.

(D4) Aging treatment

After hot rolling and subsequent water cooling, the resulting steel is then heated if necessary, and subjected to aging treatment at a temperature that is not less than 540°C and not higher than the Aci point of the steel, which is followed by cooling.

In this case, if performing heating up to the aging temperature, the average heating rate up to the aging temperature minus 100°C and the average cooling rate to 500°C are controlled. This aging treatment is a treatment for subjecting precipitates of Cu to sufficient precipitation hardening, and controls the heating rate and the cooling rate in order to obtain uniform dispersion of Cu particles.

Therefore, the heating rate is preferably an average heating rate of 5 to 50°C/min up to the aging temperature minus 100°C, the holding time is preferably 1 hour or more, and the cooling rate is preferably an average cooling rate of 5 to 60°C/min or more to 500°C.

Note that, in the present description, the heating temperature is the temperature of the atmosphere inside the furnace, the holding time after heating is the holding time at the temperature of the atmosphere inside the furnace, and the finishing temperature of hot rolling and the temperatures at the start and termination of water cooling are the surface temperatures of the steel material. Further, the average heating and cooling rates at the time of reheating are calculated by means of a temperature calculation at a position of 1/2 t when taking the thickness of the steel material as "t".

(E) Marine Structure

In order to construct a large marine structure from the high tensile strength steel according to the present invention, steel materials such as plates, tube blanks, and sections are assembled by welding, but in general the steel is used in the form of steel plates.

Although in the present description the term "excellent in weldability" normally means that arc welding with a welding heat input of 300 kJ/cm or more is possible, other welding methods such as submerged arc welding and shielded metal arc welding may also be used.

Examples of the marine structures include not only platforms and jack-up rigs which are installed on the sea floor, but also semi-submersible rig (semi-submersible oil drilling rigs) and the like. The present invention can be applied to any marine structure that requires weldability and low-temperature toughness, and there are no particular restrictions. Note that the term "marine structure is large" means that the thickness of steel material that is used for the marine structure is 50 mm or more.

EXAMPLE

The present invention will now be described more specifically by way of examples.

<Production of base metal>

Cast pieces with a thickness of 300 mm and having the chemical compositions of Test Nos. 1 to 40 shown in Table 1 were produced by a continuous casting process. The steel making conditions for each cast piece are shown in Table 2. In order to control inclusions at the center of the thickness of the respective steel plates, during continuous casting, the temperature of molten steel was not made too high, and the difference between the molten steel temperature and the solidification temperature which was determined by the chemical composition of the molten steel was controlled so as to be not more than 50°C. In addition, electromagnetic stirring immediately before solidification, and a rolling during solidification were carried out.

Each cast piece obtained by the continuous casting process was worked under the conditions shown in Table 2, and respective steel materials were obtained.

Slabs having a thickness of 300 mm were heated at the respective heating temperatures for the respective heating times and subjected to hot rolling, after which cooling was performed at an average cooling rate of 5°C/sec from the temperature at the start of water cooling to the temperature at the termination of water cooling to obtain steel plates having a thickness of 77 mm. In Table 2, these conditions are shown as "initial heating and rolling conditions".

Thereafter, the steel plates were reheated to the respective aging temperatures and held at the aging temperature for the respective holding times. In this case, the heating rate was controlled so that the average heating rate was 10°C/min until reaching the aging temperature minus 100°C, and the cooling rate was controlled so that the average cooling rate was 10°C/min until 500°C. In Table 2 these conditions are shown as "Aging Treatment Conditions".

[Table 1]

TABLE 1

Chemical Composition (mass%; balance: Fe and impurities)

| Test No. | C | Si | Mn | P | S | Cu | Ni | Al | Ti | N | O | Nb | Mo | Cr | B | V | Ca | Mg | REM | Pcm | Remarks |
|---|---|---|---|---|---|---|---|---|---|---|---|---|---|---|---|---|---|---|---|---|---|
| 1 | 0.05 | 0.10 | 1.65 | 0.010 | 0.004 | 0.97 | 0.82 | 0.002 | 0.014 | 0.005 | 0.0013 | - | - | - | - | - | - | - | - | 0.20 | Example Embodiment of Present Invention |
| 2 | 0.02 | 0.10 | 2.00 | 0.008 | 0.005 | 1.00 | 1.09 | 0.002 | 0.011 | 0.004 | 0.0031 | - | - | - | - | - | - | - | - | 0.19 | |
| 3 | 0.07 | 0.14 | 1.41 | 0.001 | 0.004 | 1.07 | 0.68 | 0.001 | 0.011 | 0.006 | 0.0027 | - | - | - | - | - | - | - | - | 0.21 | |
| 4 | 0.02 | 0.05 | 1.56 | 0.005 | 0.004 | 0.99 | 0.50 | 0.002 | 0.010 | 0.004 | 0.0009 | 0.008 | 0.32 | 0.23 | 0.0007 | 0.013 | - | 0.0007 | - | 0.20 | |
| 5 | 0.05 | 0.11 | 1.63 | 0.007 | 0.003 | 0.90 | 0.42 | 0.002 | 0.010 | 0.004 | 0.0014 | 0.008 | 0.11 | 0.12 | - | - | 0.004 | 0.0002 | - | 0.20 | |
| 6 | 0.04 | 0.11 | 1.49 | 0.008 | 0.003 | 0.90 | 0.67 | 0.001 | 0.010 | 0.005 | 0.0009 | - | 0.11 | 0.23 | - | 0.020 | 0.004 | - | 0.0013 | 0.20 | |
| 7 | 0.05 | 0.02 | 1.63 | 0.003 | 0.003 | 0.97 | 0.83 | 0.001 | 0.007 | 0.004 | 0.0009 | 0.007 | - | 0.12 | 0.0002 | 0.013 | 0.005 | 0.0017 | - | 0.20 | |
| 8 | 0.01 | 0.03 | 1.49 | 0.003 | 0.002 | 0.95 | 0.83 | 0.001 | 0.011 | 0.004 | 0.0011 | - | - | - | - | 0.020 | 0.004 | 0.0027 | 0.0034 | 0.15 | |
| 9 | 0.03 | 0.02 | 1.41 | 0.002 | 0.003 | 0.92 | 0.75 | 0.001 | 0.010 | 0.005 | 0.0009 | 0.007 | 0.23 | 0.12 | 0.0002 | 0.020 | 0.004 | - | 0.0003 | 0.18 | |
| 10 | 0.05 | 0.11 | 0.80 | 0.003 | 0.002 | 1.01 | 0.50 | 0.001 | 0.009 | 0.004 | 0.0017 | 0.007 | 0.27 | 0.29 | 0.0003 | - | 0.005 | - | 0.0024 | 0.19 | |
| 11 | 0.02 | 0.09 | 1.71 | 0.001 | 0.003 | 0.90 | 0.50 | 0.001 | 0.011 | 0.005 | 0.0020 | 0.009 | 0.32 | - | - | 0.006 | 0.004 | - | 0.0034 | 0.18 | |
| 12 | 0.05 | 0.05 | 1.41 | 0.003 | 0.001 | 0.90 | 0.58 | 0.001 | 0.011 | 0.005 | 0.0017 | 0.009 | - | - | 0.0003 | 0.013 | 0.005 | - | - | 0.20 | |
| 13 | 0.05 | 0.05 | 1.49 | 0.005 | 0.003 | 0.80 | 0.58 | 0.001 | 0.007 | 0.004 | 0.0009 | 0.004 | 0.32 | 0.06 | 0.0002 | 0.013 | 0.005 | - | 0.0024 | 0.19 | |
| 14 | 0.03 | 0.11 | 1.78 | 0.001 | 0.002 | 0.92 | 0.20 | 0.001 | 0.007 | 0.004 | 0.0017 | 0.004 | 0.19 | 0.06 | 0.0002 | - | 0.005 | 0.0022 | - | 0.19 | |
| 15 | 0.02 | 0.09 | 1.56 | 0.003 | 0.004 | 0.95 | 0.67 | 0.001 | 0.008 | 0.004 | 0.0009 | - | 0.32 | 0.29 | 0.0002 | 0.013 | - | 0.0007 | - | 0.20 | |
| 16 | 0.05 | 0.09 | 1.41 | 0.003 | 0.003 | 0.90 | 0.83 | 0.001 | 0.011 | 0.004 | 0.0011 | - | 0.19 | 0.06 | 0.0009 | 0.006 | - | 0.0017 | - | 0.19 | |
| 17 | 0.03 | 0.06 | 1.63 | 0.008 | 0.003 | 0.95 | 0.42 | 0.001 | 0.009 | 0.003 | 0.0012 | 0.004 | 0.23 | 0.12 | - | 0.006 | - | 0.0012 | - | 0.16 | |
| 18 | 0.02 | 0.07 | 1.49 | 0.003 | 0.002 | 0.97 | 0.75 | 0.001 | 0.010 | 0.004 | 0.0020 | 0.007 | - | 0.06 | 0.0003 | 0.017 | 0.005 | 0.0007 | - | 0.25 | |
| 19 | 0.10 | 0.04 | 1.40 | 0.002 | 0.003 | 0.90 | 0.67 | 0.001 | 0.007 | 0.004 | 0.0005 | - | 0.27 | - | 0.0003 | 0.017 | - | 0.0007 | 0.0003 | 0.21 | |
| 20 | 0.03 | 0.50 | 1.41 | 0.003 | 0.003 | 0.99 | 0.58 | 0.001 | 0.008 | 0.005 | 0.0014 | - | 0.27 | 0.29 | 0.0003 | 0.020 | - | 0.0027 | - | 0.25 | |
| 21 | 0.05 | 0.03 | 2.27 | 0.002 | 0.003 | 0.89 | 0.52 | 0.001 | 0.010 | 0.004 | 0.0023 | - | 0.30 | 0.21 | - | 0.017 | 0.004 | - | - | 0.20 | |
| 22 | 0.05 | 0.07 | 1.63 | 0.020 | 0.004 | 1.01 | 0.75 | 0.001 | 0.009 | 0.004 | 0.0020 | 0.009 | 0.11 | 0.06 | - | - | 0.004 | 0.0012 | - | 0.18 | |
| 23 | 0.02 | 0.02 | 1.41 | 0.001 | 0.010 | 0.99 | 0.83 | 0.002 | 0.007 | 0.004 | 0.0020 | 0.009 | 0.27 | 0.18 | - | 0.006 | - | 0.0007 | 0.0054 | 0.21 | |
| 24 | 0.04 | 0.05 | 1.41 | 0.007 | 0.002 | 1.50 | 0.75 | 0.001 | 0.008 | 0.004 | 0.0017 | - | 0.27 | 0.12 | 0.0003 | 0.013 | 0.005 | 0.0007 | - | 0.19 | |
| 25 | 0.02 | 0.02 | 1.78 | 0.005 | 0.003 | 0.99 | 1.50 | 0.001 | 0.007 | 0.005 | 0.0020 | 0.007 | - | - | 0.0003 | 0.009 | 0.004 | 0.0017 | - | 0.20 | |
| 26 | 0.05 | 0.12 | 1.49 | 0.007 | 0.004 | 0.92 | 1.04 | 0.003 | 0.030 | 0.004 | 0.0023 | - | 0.27 | 0.06 | 0.0003 | 0.020 | - | 0.0002 | - | 0.18 | |
| 27 | 0.02 | 0.05 | 1.71 | 0.008 | 0.002 | 1.10 | 1.04 | 0.001 | 0.010 | 0.005 | 0.0009 | 0.008 | 0.27 | - | 0.0003 | 0.020 | - | 0.0017 | 0.0044 | 0.18 | |
| 28 | 0.04 | 0.09 | 1.41 | 0.007 | 0.003 | 0.95 | 1.04 | 0.003 | 0.008 | 0.008 | 0.0023 | - | - | 0.35 | - | 0.013 | 0.004 | - | - | 0.19 | |
| 29 | 0.04 | 0.11 | 1.49 | 0.008 | 0.003 | 0.99 | 0.58 | 0.001 | 0.009 | 0.004 | 0.0050 | 0.009 | 0.32 | 0.23 | 0.0003 | - | 0.005 | 0.0002 | - | 0.19 | |
| 30 | 0.07 | 0.14 | 1.41 | 0.001 | 0.004 | 1.07 | 0.68 | 0.001 | 0.011 | 0.006 | 0.0027 | - | - | - | - | - | - | - | - | 0.21 | Comparative Example |
| 31 | 0.05 | 0.05 | 1.65 | 0.010 | 0.003 | 0.97 | 0.82 | 0.002 | 0.009 | 0.005 | 0.0006 | - | - | - | - | 0.005 | - | - | - | 0.20 | |
| 32 | 0.06 | 0.09 | 1.67 | 0.001 | 0.001 | 0.99 | 0.61 | 0.002 | 0.021 | 0.005 | 0.0030 | - | - | - | - | - | - | - | - | 0.21 | |
| 33 | 0.11 | 0.04 | 1.82 | 0.006 | 0.003 | 1.02 | 1.04 | 0.001 | 0.010 | 0.005 | 0.0035 | - | 0.26 | 0.16 | 0.0002 | 0.005 | 0.005 | 0.0001 | - | 0.28 | |
| 34 | 0.06 | 0.52 | 1.68 | 0.003 | 0.004 | 0.98 | 1.20 | 0.001 | 0.007 | 0.006 | 0.0035 | - | 0.42 | 0.18 | 0.0003 | 0.006 | 0.005 | 0.0011 | - | 0.28 | |
| 35 | 0.07 | 0.20 | 2.90 | 0.012 | 0.002 | 1.10 | 1.04 | 0.003 | 0.012 | 0.005 | 0.0035 | 0.010 | - | 0.27 | 0.0002 | 0.026 | - | 0.0001 | - | 0.31 | |
| 36 | 0.06 | 0.12 | 1.68 | 0.007 | 0.003 | 1.90 | 1.04 | 0.001 | 0.010 | 0.004 | 0.0024 | 0.008 | - | - | - | 0.033 | 0.005 | - | 0.0060 | 0.26 | |
| 37 | 0.07 | 0.05 | 1.82 | 0.015 | 0.003 | 1.10 | 1.04 | 0.001 | 0.032 | 0.004 | 0.0013 | - | - | - | - | - | - | 0.0011 | - | 0.23 | |
| 38 | 0.07 | 0.20 | 2.10 | 0.003 | 0.004 | 1.06 | 0.40 | 0.005 | 0.015 | 0.004 | 0.0008 | 0.010 | - | 0.16 | - | 0.005 | 0.004 | 0.0001 | - | 0.25 | |
| 39 | 0.04 | 0.08 | 1.40 | 0.003 | 0.004 | 1.06 | 0.56 | 0.003 | 0.007 | 0.010 | 0.0035 | - | 0.42 | - | - | - | 0.005 | 0.0001 | - | 0.21 | |
| 40 | 0.02 | 0.12 | 1.54 | 0.006 | 0.004 | 0.98 | 1.04 | 0.001 | 0.012 | 0.005 | 0.0065 | 0.008 | 0.18 | 0.05 | 0.0003 | 0.019 | 0.005 | 0.0021 | 0.0080 | 0.19 | |

Mark "*" indicates value is outside range defined by the present invention.

[Table 2]

TABLE 2

| Test No. | Steelmaking Conditions | | | Initial Heating and Rolling Conditions | | | | | | Aging Treatment Conditions | | | |
|---|---|---|---|---|---|---|---|---|---|---|---|---|---|
| | Oxp [ppm] | Ar Gas Flow Rate [L/min] | Time [min] | Heating Temp. [°C] | Heating Time [hour] | Rolling Finishing Temp. [°C] | Cooling Start Temp. [°C] | Cooling Rate [°C/sec] | Cooling Termination Temp. [°C] | Aging Temp. [°C] | Average Heating Rate [°C/min] | Holding Time [hour] | Average Cooling Rate [°C/min] |
| 1 | 17 | 150 | 10 | 950 | 10 | 730 | 710 | 5 | 350 | 650 | 10 | 5 | 10 |
| 2 | 28 | 150 | 10 | 950 | 10 | 735 | 705 | 5 | 350 | 580 | 10 | 5 | 10 |
| 3 | 29 | 150 | 10 | 950 | 10 | 740 | 710 | 5 | 350 | 570 | 10 | 5 | 10 |
| 4 | 11 | 150 | 10 | 950 | 10 | 730 | 710 | 5 | 350 | 580 | 10 | 5 | 10 |
| 5 | 18 | 150 | 10 | 950 | 10 | 730 | 710 | 5 | 350 | 620 | 10 | 5 | 10 |
| 6 | 11 | 150 | 10 | 950 | 10 | 745 | 710 | 5 | 350 | 635 | 10 | 5 | 10 |
| 7 | 11 | 150 | 10 | 950 | 10 | 730 | 710 | 5 | 350 | 650 | 10 | 5 | 10 |
| 8 | 15 | 150 | 10 | 950 | 5 | 725 | 715 | 5 | 350 | 650 | 10 | 5 | 10 |
| 9 | 11 | 150 | 10 | 950 | 5 | 725 | 710 | 5 | 350 | 650 | 10 | 5 | 10 |
| 10 | 22 | 150 | 10 | 950 | 5 | 730 | 715 | 5 | 350 | 650 | 10 | 5 | 10 |
| 11 | 26 | 150 | 10 | 950 | 5 | 730 | 715 | 5 | 350 | 650 | 10 | 5 | 10 |
| 12 | 22 | 150 | 10 | 950 | 5 | 730 | 715 | 5 | 350 | 650 | 10 | 5 | 10 |
| 13 | 11 | 150 | 10 | 950 | 5 | 735 | 710 | 5 | 350 | 650 | 10 | 5 | 10 |
| 14 | 22 | 150 | 10 | 950 | 5 | 740 | 710 | 5 | 350 | 650 | 10 | 5 | 10 |
| 15 | 11 | 150 | 10 | 950 | 5 | 730 | 720 | 5 | 350 | 650 | 10 | 5 | 10 |
| 16 | 15 | 150 | 10 | 950 | 5 | 730 | 715 | 5 | 350 | 650 | 10 | 5 | 10 |
| 17 | 26 | 150 | 10 | 950 | 5 | 720 | 710 | 5 | 350 | 650 | 10 | 5 | 10 |
| 18 | 10 | 150 | 10 | 950 | 5 | 715 | 710 | 5 | 350 | 650 | 10 | 5 | 10 |
| 19 | 18 | 150 | 10 | 950 | 5 | 715 | 710 | 5 | 350 | 650 | 10 | 5 | 10 |
| 20 | 29 | 150 | 10 | 950 | 5 | 730 | 710 | 5 | 350 | 650 | 10 | 5 | 10 |
| 21 | 26 | 150 | 10 | 950 | 5 | 730 | 715 | 5 | 350 | 650 | 10 | 5 | 10 |
| 22 | 26 | 150 | 10 | 950 | 5 | 715 | 710 | 5 | 350 | 650 | 10 | 5 | 10 |
| 23 | 26 | 150 | 10 | 950 | 5 | 745 | 720 | 5 | 350 | 650 | 10 | 5 | 10 |
| 24 | 22 | 150 | 10 | 950 | 5 | 730 | 710 | 5 | 350 | 650 | 10 | 5 | 10 |
| 25 | 26 | 150 | 10 | 950 | 5 | 725 | 710 | 5 | 350 | 650 | 10 | 5 | 10 |
| 26 | 29 | 150 | 10 | 950 | 5 | 730 | 705 | 5 | 350 | 650 | 10 | 5 | 10 |
| 27 | 11 | 150 | 10 | 950 | 5 | 730 | 715 | 5 | 350 | 650 | 10 | 5 | 10 |
| 28 | 29 | 150 | 10 | 950 | 5 | 730 | 710 | 5 | 350 | 650 | 10 | 5 | 10 |
| 29 | 27 | 150 | 10 | 950 | 5 | 720 | 710 | 5 | 350 | 650 | 10 | 5 | 10 |
| 30 | 26 | 150 | 10 | 1000 | 10 | 745 | 700 | 5 | 250 | 700 | 10 | 5 | 10 |
| 31 | 8 | 250 | 20 | 950 | 5 | 720 | 710 | 5 | 350 | 650 | 10 | 5 | 10 |
| 32 | 35 | 50 | 0 | 950 | 5 | 720 | 710 | 5 | 350 | 650 | 10 | 5 | 10 |
| 33 | 24 | 150 | 10 | 1000 | 5 | 710 | 700 | 5 | 250 | 650 | 10 | 5 | 10 |
| 34 | 26 | 150 | 10 | 1000 | 5 | 730 | 710 | 5 | 250 | 650 | 10 | 5 | 10 |
| 35 | 25 | 150 | 10 | 1000 | 5 | 730 | 710 | 5 | 250 | 650 | 10 | 5 | 10 |
| 36 | 27 | 150 | 10 | 1000 | 5 | 730 | 710 | 5 | 250 | 650 | 10 | 5 | 10 |
| 37 | 17 | 150 | 10 | 1000 | 5 | 730 | 710 | 5 | 250 | 650 | 10 | 5 | 10 |
| 38 | 10 | 150 | 10 | 1000 | 5 | 730 | 710 | 5 | 250 | 650 | 10 | 5 | 10 |
| 39 | 29 | 150 | 10 | 1000 | 5 | 720 | 705 | 5 | 250 | 650 | 10 | 5 | 10 |
| 40 | 85 | 150 | 10 | 1000 | 5 | 730 | 710 | 5 | 250 | 650 | 10 | 5 | 10 |

<Calculation of equivalent circular diameter of Cu particles>

The equivalent circular diameter of Cu particles was determined by performing transmission electron microscope (TEM) observation at a magnification of 100,000 at a position of one quarter of the plate thickness t of each steel material, and measuring a projected area of each precipitate having a major axis of 1 nm or more.

A single visual field in the TEM observation was set as a rectangle measuring 900 nm×700 nm, and TEM observation was performed for a total of 10 visual fields. An average value of the equivalent circular diameters of the Cu particles in each visual field was calculated, and the calculated average values were then used to determine the average value of the equivalent circular diameters of the Cu particles in the total of 10 visual fields. The results are shown in Table 3.

<Calculation of plane-converted distribution amount>

The plane-converted distribution amount of Cu particles was determined by working each steel material into a thin film, performing TEM observation at a magnification of 100,000 with respect to a portion of the thin film e having a thickness of approximately 0.2 $\mu$m, and calculating the area fraction in a case where Cu particles that were three-dimensionally distributed in the thin film shaped specimen which were projected onto a plane.

A single visual field in the TEM observation was set as a rectangle measuring 900 nm$\times$700 nm, and TEM observation was performed for a total of 10 visual fields. An average value of the plane-converted distribution amounts of the Cu particles in each visual field was calculated, and the calculated average values were then used to determine the average value of the plane-converted distribution amount of the Cu particles in the total of 10 visual fields. The results are shown in Table 3.

<Calculation of MnS area fraction in cross-section of composite inclusion, and proportion MnS accounts for in peripheral length of composite inclusion>

The specimen used for composite inclusion analysis was taken from a portion that was at a plate thickness of 1/4t. The MnS area fraction and the proportion that MnS accounted for in the peripheral length of the composite inclusions were measured from a mapping image obtained by performing area analysis of composite inclusions using an electron probe microanalyzer (EPMA).

A composite inclusion in which MnS is present around a Ti oxide is contained in the steel.

Specifically, the MnS area fraction was calculated by measuring the cross-sectional area of the entire composite inclusion and the cross-sectional area that an MnS portion accounted for in the entire composite inclusion from an image. To reduce variations in the measurements, the MnS area fraction and the proportion that MnS accounted for in the peripheral length of the composite inclusions was determined by performing analysis by EPMA for twenty composite inclusions per specimen, and calculating the average values. The results are shown in Table 3.

<Calculation of number density of composite inclusions>

The number density of the composite inclusions was calculated by calculating the number of composite inclusions whose grain diameter was in the range of 0.5 to 5.0 $\mu$m from shape measurement data of the detected composite inclusions and by means of an automatic inclusion analyzer combined with SEM-EDX. The results are shown in Table 3.

<Tension test>

For each steel material, a tensile test specimen having a parallel portion with a diameter of 12.5 mm was taken in accordance with ASTM standards from the center of the plate thickness in a direction perpendicular to the rolling direction, a tension test was performed, and the yield strength (YS) and tensile strength (TS) of the base metal were measured. The results are shown in Table 3.

A yield strength (YS) in a range of 420 to 630 MPa was determined as having passed the test. Further, a tensile strength (TS) in a range of 500 to 700 MPa was determined as having passed the test.

<CTOD test>

A CTOD test of the base metal was carried out for each steel material at -40°C in accordance with the BS 7448 standards using a three-point bending test specimen which had the full thickness of the steel material and which was taken in a direction perpendicular to the rolling direction. The results are shown in Table 3. A CTOD value of 0.40 mm or more was determined as having passed the test.

For a CTOD test for a welded joint formed by low heat input welding, for each steel material, a welded joint was obtained by performing FCAW (flux cored arc welding) at 10.0 kJ/cm on butted parts of a steel plate prepared so as to form a K-shaped weld groove in accordance with BS7448 standards. Next, from the welded joint, a CTOD test specimen was obtained by working so as to form a fatigue notch of the CTOD test specimen in alignment with the weld line on a straight portion side of a V-type edge of the joint, and the obtained CTOD test specimen was subjected to a CTOD test at -40°C. The results are shown in Table 3. Note that a CTOD value of 0.40 mm or more was determined as having passed the test.

For a CTOD test for a welded joint formed by high heat input welding, a welded joint was produced by working edges of each steel material to form 20° V-shaped beveled edges, and then abutting the edges and performing electrogas arc welding (EGW) with a heat input of 350 kJ/cm. Next, a CTOD test was carried out at -10°C in accordance with ASTM E1290 using the welded joint. The results are shown in Table 3. Note that a CTOD value of 0.30 mm or more was determined as having passed the test. Further, the CTOD test specimen was worked so that the fatigue notch was in alignment with the weld line.

[Table 3]

TABLE 3

| Test No. | Inclusions | | | | | Mechanical Properties | | | | | Remarks |
|---|---|---|---|---|---|---|---|---|---|---|---|
| | Cu Particles Equivalent Circular Diameter [nm] | Cu Particles Plane-Converted Distribution Amount [%] | MnS Area Fraction (%) in Composite Inclusion Cross-Section | Proportion (%) MnS Accounts for in Peripheral Length of Composite Inclusion | Number Density of Composite Inclusions (per mm²) | Base Metal Strength | | Base Metal Toughness | Joint Toughness | | |
| | | | | | | YS [MPa] | TS [MPa] | Base Metal CTOD [mm] | Low Heat Input Joint CTOD -40°C [mm] | High Heat Input Joint CTOD -10°C [mm] | |
| 1 | 17 | 10 | 40 | 45 | 25 | 506 | 567 | >1.3 | 1.12 | 0.65 | Example Embodiment of Present Invention |
| 2 | 18 | 18 | 63 | 59 | 20 | 596 | 594 | 1.25 | 1.15 | 0.66 | |
| 3 | 20 | 14 | 34 | 36 | 21 | 512 | 555 | >1.3 | 1.15 | 0.51 | |
| 4 | 10 | 14 | 36 | 40 | 15 | 497 | 570 | >1.3 | 1.20 | 0.62 | |
| 5 | 12 | 13 | 42 | 46 | 16 | 593 | 588 | >1.3 | >1.3 | 0.61 | |
| 6 | 16 | 10 | 31 | 36 | 11 | 579 | 631 | 1.10 | 1.14 | 0.59 | |
| 7 | 12 | 18 | 41 | 45 | 11 | 481 | 551 | >1.3 | 1.10 | 0.57 | |
| 8 | 20 | 11 | 35 | 33 | 14 | 587 | 600 | >1.3 | >1.3 | 0.63 | |
| 9 | 11 | 15 | 30 | 31 | 12 | 599 | 576 | >1.3 | >1.3 | 0.66 | |
| 10 | 19 | 11 | 13 | 16 | 19 | 599 | 609 | >1.3 | 1.09 | 0.51 | |
| 11 | 13 | 15 | 64 | 60 | 20 | 500 | 552 | >1.3 | >1.3 | 0.59 | |
| 12 | 14 | 18 | 36 | 34 | 16 | 513 | 633 | >1.3 | 1.05 | 0.55 | |
| 13 | 20 | 18 | 37 | 36 | 11 | 502 | 616 | >1.3 | >1.3 | 0.57 | |
| 14 | 13 | 17 | 55 | 51 | 13 | 524 | 576 | 1.05 | 1.01 | 0.61 | |
| 15 | 10 | 18 | 39 | 43 | 12 | 480 | 610 | >1.3 | 1.00 | 0.55 | |
| 16 | 20 | 13 | 35 | 31 | 13 | 515 | 609 | >1.3 | >1.3 | 0.69 | |
| 17 | 16 | 17 | 61 | 60 | 19 | 595 | 594 | >1.3 | >1.3 | 0.71 | |
| 18 | 19 | 17 | 30 | 33 | 11 | 507 | 564 | >1.3 | 1.00 | 0.55 | |
| 19 | 10 | 10 | 36 | 39 | 11 | 591 | 596 | 1.15 | 0.67 | 0.34 | |
| 20 | 17 | 15 | 29 | 24 | 13 | 521 | 644 | 1.21 | 0.55 | 0.39 | |
| 21 | 20 | 11 | 84 | 86 | 19 | 513 | 565 | 1.09 | 0.61 | 0.30 | |
| 22 | 10 | 10 | 51 | 55 | 17 | 591 | 611 | 1.21 | 0.63 | 0.35 | |
| 23 | 13 | 10 | 31 | 35 | 14 | 588 | 628 | 1.25 | 0.54 | 0.30 | |
| 24 | 11 | 13 | 32 | 34 | 13 | 518 | 589 | 1.01 | 0.53 | 0.34 | |
| 25 | 14 | 11 | 45 | 61 | 18 | 482 | 593 | >1.3 | 0.89 | 0.46 | |
| 26 | 20 | 16 | 36 | 33 | 40 | 554 | 591 | 1.06 | 0.75 | 0.41 | |
| 27 | 20 | 16 | 61 | 60 | 16 | 502 | 573 | 1.04 | 0.59 | 0.31 | |
| 28 | 14 | 13 | 39 | 37 | 29 | 554 | 573 | 1.06 | 0.51 | 0.37 | |
| 29 | 17 | 17 | 34 | 33 | 86 | 569 | 600 | 1.03 | 0.56 | 0.36 | |
| 30 | 30 * | 2 * | 37 | 34 | 31 | 410 # | 468 # | >1.3 | 1.15 | 0.39 | Comparative Example |
| 31 | 16 | 15 | 64 | 67 | 3 * | 571 | 589 | 0.94 | 0.05 # | 0.02 # | |
| 32 | 14 | 13 | 5 * | 7 * | 25 | 573 | 584 | 0.91 | 0.09 # | 0.04 # | |
| 33 | 23 | 15 | 57 | 59 | 36 | 580 | 578 | >1.3 | 0.34 # | 0.09 # | |
| 34 | 20 | 15 | 49 | 47 | 26 | 569 | 570 | 1.15 | 0.31 # | 0.05 # | |
| 35 | 14 | 16 | 91 * | 90 | 37 | 518 | 615 | 1.21 | 0.25 # | 0.05 # | |
| 36 | 21 | 17 | 40 | 46 | 31 | 650 # | 720 # | 0.95 | 0.32 # | 0.07 # | |
| 37 | 15 | 18 | 61 | 69 | 105 * | 548 | 574 | 1.01 | 0.21 # | 0.08 # | |
| 38 | 11 | 17 | 82 | 78 | 8 * | 567 | 553 | 1.16 | 0.29 # | 0.07 # | |
| 39 | 21 | 16 | 29 | 36 | 11 | 514 | 582 | 1.26 | 0.16 # | 0.07 # | |
| 40 | 16 | 20 | 24 | 34 | 104 * | 512 | 615 | 0.68 | 0.11 # | 0.03 # | |

Mark"*" indicates value is outside range defined by the present invention.
Mark"#" means that value that is target in the present invention was not reached.

Test Nos. 1 to 29 in Table 3 are example embodiments of the present inventions that satisfied all the conditions of the present invention, while Test Nos. 30 to 40 are comparative examples that did not satisfy the conditions of the present invention.

Because Test Nos. 1 to 29 satisfied all the conditions of the present invention, the strength and toughness of the base metal as well as the toughness of the welded joint were all good.

Although Test No. 30 satisfied the conditions with respect to the chemical composition defined by the present invention, the strength of the base metal was a low value because the dispersion state of the Cu particles did not satisfy the condition regarding the range defined by the present invention. Accordingly, in order to compatibly achieve both high heat input welding properties and base metal strength, it is necessary to satisfy the condition with respect to the dispersion state of Cu particles defined by the present invention.

Although Test Nos. 31 and 32 satisfied the conditions with respect to the chemical composition defined by the present invention, the composite inclusions did not satisfy the condition regarding the range defined by the present invention, and hence the joint CTOD properties were poor.

In addition, because Test Nos. 33 to 40 did not satisfy the conditions with respect to the chemical composition defined by the present invention, it was not possible to satisfy each of the conditions regarding the base metal strength, the base metal CTOD properties, and the CTOD properties of the joints (-40°C and -10°C).

INDUSTRIAL APPLICABILITY

According to the present invention, a high tensile strength steel with which low-temperature toughness in a weld zone, particularly HAZ toughness, is stably obtained under a high heat input welding condition of a heat input of 300 kJ/cm or more can be provided. Therefore, the high tensile strength steel according to the present invention can be favorably used for marine structures and the like for which stricter CTOD properties are demanded.

**Claims**

1. A high tensile strength steel having a chemical composition comprising, by mass%,

> C: 0.01 to 0.10%,
> Si: 0.01 to 0.50%,
> Mn: 0.80 to 2.50%,
> P: 0.020% or less,
> S: 0.001 to 0.010%,
> Cu: 0.80 to 1.50%,
> Ni: 0.20 to 1.50%,
> Al: 0.003% or less,
> Ti: 0.005 to 0.030%,
> N: 0.003 to 0.008%,
> O: 0.0005 to 0.0050%,
> Nb: 0 to 0.030%,
> Mo: 0 to 0.80%,
> Cr: 0 to 0.80%,
> B: 0 to 0.0020%,
> V: 0 to 0.050%,
> Ca: 0 to 0.005%,
> Mg: 0 to 0.01%,
> REM: 0 to 0.01%, and
> the balance: Fe and impurities, wherein:

> > a cracking parameter of material Pcm shown by formula (1) below is 0.25 or less;
> > Cu particles having a major axis of 1 nm or more are dispersed in the steel, and an average value of an equivalent circular diameter of the Cu particles is in a range of 4 to 25 nm, and a plane-converted distribution amount of the Cu particles is in a range of 3 to 20%, wherein the major axis, average value of an equivalent circular diameter, and plane-converted distribution amount are determined as disclosed in the description;
> > a composite inclusion in which MnS is present around a Ti oxide is contained in the steel;
> > an area fraction of the MnS in a cross-section of the composite inclusion is 10% or more and less than 90%;
> > a proportion that the MnS accounts for in a peripheral length of the composite inclusion is 10% or more; and
> > a number density of the composite inclusions which have a grain diameter in a range of 0.5 to 5.0 $\mu$m is in a range of 10 to 100 per mm$^2$, wherein the area fraction of the MnS, proportion that the MnS accounts for in a peripheral length, number density of the composite inclusions, and grain diameter are determined as disclosed in the description;

$$Pcm=C+(Si/30)+(Mn/20)+(Cu/20)+(Ni/60)+(Cr/20)+(Mo/15)+(V/10)+5B...(1)$$

where, each symbol of an element in formula (1) represents a content (mass%) of the relevant element.

2. The high tensile strength steel according to claim 1, containing, by mass%, one or more types of element selected from:

   Nb: 0.003 to 0.030%,
   Mo: 0.10 to 0.80%,
   Cr: 0.03 to 0.80%,
   B: 0.0002 to 0.0020%, and
   V: 0.001 to 0.050%.

3. The high tensile strength steel according to claim 1 or 2, containing, by mass%, one or more types of element selected from:

   Ca: 0.0005 to 0.005%,
   Mg: 0.0001 to 0.01%, and
   REM: 0.0001 to 0.01%.

4. A steel according to any one of claims 1 to 3, having a yield strength of 420 to 630 MPa, determined by taking a tensile test specimen having a parallel portion with a diameter of 12.5 mm in accordance with ASTM standards from the center of the plate thickness in a direction perpendicular to the rolling direction, and performing a tension test.

5. A steel according to any one of claims 1 to 4, having a tensile strength of 500 to 700 MPa, determined by taking a tensile test specimen having a parallel portion with a diameter of 12.5 mm in accordance with ASTM standards from the center of the plate thickness in a direction perpendicular to the rolling direction, and performing a tension test.

6. A steel according to any one of claims 1 to 5, having a thickness of 50 mm or more.

7. A marine structure that includes a high tensile strength steel according to any one of claims 1 to 6.

**Patentansprüche**

1. Hochfester Stahl mit einer chemischen Zusammensetzung umfassend, in Masse-%,

   C: 0,01 bis 0,10%,
   Si: 0,01 bis 0,50%,
   Mn: 0,80 bis 2,50%,
   P: 0,020% oder weniger,
   S: 0,001 bis 0,010%,
   Cu: 0,80 bis 1,50%,
   Ni: 0,20 bis 1,50%,
   Al: 0,003% oder weniger,
   Ti: 0,005 bis 0,030%,
   N: 0,003 bis 0,008%,
   O: 0,0005 bis 0,0050%,
   Nb: 0 bis 0,030%,
   Mo: 0 bis 0,80%,
   Cr: 0 bis 0,80%,
   B: 0 bis 0,0020%,
   V: 0 bis 0,050%,
   Ca: 0 bis 0,005%,
   Mg: 0 bis 0,01%,
   REM: 0 bis 0,01%, und
   als Rest: Fe und Verunreinigungen, wobei:

   ein Rissbildungsparameter des durch die nachstehende Formel (1) dargestellten Materials Pcm 0,25 oder weniger beträgt;

Cu-Teilchen mit einer Hauptachse von 1 nm oder mehr in dem Stahl dispergiert sind, und ein Durchschnittswert eines äquivalenten Kreisdurchmessers der Cu-Teilchen in einem Bereich von 4 bis 25 nm liegt und eine Ebenen-umgewandelte Verteilungsmenge der Cu-Teilchen in einem Bereich von 3 bis 20% liegt, wobei die Hauptachse, der Durchschnittswert eines äquivalenten Kreisdurchmessers und die Ebenen-umgewandelte Verteilungsmenge wie in der Beschreibung offenbart bestimmt werden;

ein Verbundeinschluss, in dem MnS um ein Ti-Oxid herum vorhanden ist, in dem Stahl enthalten ist;

ein Flächenanteil des MnS in einem Querschnitt des Verbundeinschlusses 10 % oder mehr und weniger als 90 % beträgt;

ein Anteil des MnS in einer Umfangslänge des Verbundeinschlusses 10 % oder mehr beträgt; und

eine Anzahldichte der Verbundeinschlüsse, die einen Korndurchmesser in einem Bereich von 0,5 bis 5,0 $\mu$m aufweisen, in einem Bereich von 10 bis 100 pro mm$^2$ liegt, wobei der Flächenanteil des MnS, der Anteil, den das MnS in einer Umfangslänge ausmacht, die Anzahldichte der Verbundeinschlüsse und der Korndurchmesser wie in der Beschreibung offenbart bestimmt werden;

$$Pcm=C+(Si/30)+(Mn/20)+(Cu/20)+(Ni/60)+(Cr/20)+(Mo/15)+(V/10)+5B...(1)$$

wobei jedes Symbol eines Elements in Formel (1) einen Gehalt (Masse-%) des betreffenden Elements darstellt.

2. Hochfester Stahl nach Anspruch 1, enthaltend in Masse-% eine oder mehrere Arten von Elementen, ausgewählt aus:

Nb: 0,003 bis 0,030%,
Mo: 0,10 bis 0,80%,
Cr: 0,03 bis 0,80%,
B: 0,0002 bis 0,0020%, und
V: 0,001 bis 0,050%.

3. Hochfester Stahl nach Anspruch 1 oder 2, enthaltend, in Masse-%, eine oder mehrere Arten von Elementen, ausgewählt aus:

Ca: 0,0005 bis 0,005%,
Mg: 0,0001 bis 0,01%, und
REM: 0,0001 bis 0,01%.

4. Stahl nach einem der Ansprüche 1 bis 3 mit einer Streckgrenze von 420 bis 630 MPa, bestimmt durch Entnahme einer Zugprobe mit einem parallelen Abschnitt mit einem Durchmesser von 12,5 mm gemäß ASTM-Normen aus der Mitte der Blechdicke in einer Richtung senkrecht zur Walzrichtung, und Durchführung eines Zugtests.

5. Stahl nach einem der Ansprüche 1 bis 4 mit einer Zugfestigkeit von 500 bis 700 MPa, bestimmt durch Entnahme einer Zugprobe mit einem parallelen Abschnitt mit einem Durchmesser von 12,5 mm gemäß den ASTM-Normen aus der Mitte der Blechdicke in einer Richtung senkrecht zur Walzrichtung, und Durchführung eines Zugtests.

6. Stahl nach einem der Ansprüche 1 bis 5, mit einer Dicke von 50 mm oder mehr.

7. Marine-Struktur, die einen hochfesten Stahl nach einem der Ansprüche 1 bis 6 aufweist.

**Revendications**

1. Acier à haute résistance à la traction ayant une composition chimique comprenant, en % en masse,

C: 0,01 à 0,10 %,
Si: 0,01 à 0,50 %,
Mn: 0,80 à 2,50 %,
P: 0,020 % ou moins,
S: 0,001 à 0,010 %,
Cu: 0,80 à 1,50 %,

Ni: 0,20 à 1,50 %,
Al: 0,003 % ou moins,
Ti: 0,005 à 0,030 %,
N: 0,003 à 0,008 %,
O: 0,0005 à 0,0050 %,
Nb: 0 à 0,030 %,
Mo: 0 à 0,80 %,
Cr: 0 à 0,80 %,
B: 0 à 0,0020 %,
V: 0 à 0,050 %,
Ca: 0 à 0,005 %,
Mg: 0 à 0,01 %,
MTR: 0 à 0,01 %, et
le reste: Fe et impuretés, où:

un paramètre de fissuration de matériau Pcm représenté par la formule (1) ci-dessous est 0,25 ou moins; des particules de Cu ayant un grand axe de 1 nm ou plus sont dispersées dans l'acier, et une valeur moyenne d'un diamètre circulaire équivalent des particules de Cu est dans une plage de 4 à 25 nm, et une quantité de distribution convertie dans un plan des particules de Cu est dans une plage de 3 à 20 %, où le grand axe, la valeur moyenne d'un diamètre circulaire équivalent et la quantité de distribution convertie dans un plan sont déterminés comme indiqué dans la description; une inclusion composite dans laquelle MnS est présent autour d'un oxyde de Ti est contenue dans l'acier; une fraction surfacique du MnS dans une section transversale de l'inclusion composite est 10 % ou plus et inférieure à 90 %; une proportion que le MnS représente dans une longueur périphérique de l'inclusion composite est 10 % ou plus; et une densité numérique des inclusions composites qui ont un diamètre de grain dans une plage de 0,5 à 5,0 $\mu$m est dans une plage de 10 à 100 par mm$^2$, où la fraction surfacique du MnS, la proportion que le MnS représente dans une longueur périphérique, la densité numérique des inclusions composites et le diamètre de grain sont déterminés comme indiqué dans la description;

$$Pcm=C+(Si/30)+(Mn/20)+(Cu/20)+(Ni/60)+(Cr/20)+(Mo/15)+(V/10)+5B \quad (1)$$

où, chaque symbole d'un élément dans la formule (1) représente une teneur (% en masse) de l'élément pertinent.

2. Acier à haute résistance à la traction selon la revendication 1, contenant, en % en masse, un ou plusieurs types d'éléments choisis parmi:

Nb: 0,003 à 0,030 %,
Mo: 0,10 à 0,80 %,
Cr: 0,03 à 0,80 %,
B: 0,0002 à 0,0020 % et
V: 0,001 à 0,050 %.

3. Acier à haute résistance à la traction selon la revendication 1 ou 2, contenant, en % en masse, un ou plusieurs types d'éléments choisis parmi:

Ca: 0,0005 à 0,005 %,
Mg: 0,0001 à 0,01 %, et
MTR: 0,0001 à 0,01 %.

4. Acier selon l'une quelconque des revendications 1 à 3, ayant une limite d'élasticité de 420 à 630 MPa, déterminée en prenant une éprouvette de traction ayant une partie parallèle avec un diamètre de 12,5 mm conformément aux normes ASTM à partir du centre de l'épaisseur de plaque dans une direction perpendiculaire à la direction de laminage, et réalisant un essai de traction.

**5.** Acier selon l'une quelconque des revendications 1 à 4, ayant une résistance à la traction de 500 à 700 MPa, déterminée en prenant une éprouvette de traction ayant une partie parallèle avec un diamètre de 12,5 mm conformément aux normes ASTM à partir du centre de l'épaisseur de plaque dans une direction perpendiculaire à la direction de laminage, et réalisant un essai de traction.

**6.** Acier selon l'une quelconque des revendications 1 à 5, ayant une épaisseur de 50 mm ou plus.

**7.** Structure marine qui inclut un acier à haute résistance à la traction selon l'une quelconque des revendications 1 à 6.

**REFERENCES CITED IN THE DESCRIPTION**

**Patent documents cited in the description**

- JP 7081164 A
- JP 5186820 A
- JP 5179344 A
- WO 2005052205 A
- US 2007051433 A1